# EUROPÄISCHE PATENTSCHRIFT

(11) **EP 2 403 999 B1**
(45) Veröffentlichungstag und Bekanntmachung des Hinweises auf die Patenterteilung: **14.10.2015**
(21) Anmeldenummer: 10706531.0
(22) Anmeldetag: 24.02.2010
(51) Int. Cl.: E03C 1/08, F16J 15/06

(54) **STRAHLREGLER**
JET REGULATOR
BRISE-JET

(30) Priorität: 03.03.2009 DE 102009011413
(43) Veröffentlichungstag der Anmeldung: 11.01.2012
(73) Patentinhaber: Neoperl GmbH, 79379 Müllheim (DE)
(72) Erfinder: DENZLER, Oliver, CH-4103 Bottmingen (CH); SCHÜRLE, Holger, 79379 Müllheim (DE)
(74) Vertreter: Kunst, Manuel Nikolaus Johannes
(86) Internationale Anmeldenummer: PCT/EP2010/001140
(87) Internationale Veröffentlichungsnummer: WO 2010/099889

(56) Entgegenhaltungen:
- EP-A1- 1 900 980
- DE-A1-102006 046 245
- DE-B3- 10 354 150
- US-A1- 2003 107 185

## Beschreibung

Die Erfindung betrifft einen Strahlregler, der ein im Querschnitt rechteckiges Strahlreglergehäuse aufweist, das in den Wasserauslauf einer sanitären Auslaufarmatur einsetzbar ist, wobei das Strahlreglergehäuse in den Eckbereichen seiner Rechteckform gerundet ist und wobei das Strahlreglergehäuse an seinem Gehäuseaußenumfang zumindest eine Dichtung trägt zum Abdichten zwischen dem Innenumfang des Wasserauslaufs und dem Außenumfang des Strahlreglergehäuses.

Aus der DE 10354150 B3 ist bereits eine sanitäre Auslaufarmatur vorbekannt, deren Wasserauslauf einen rechteckigen Auslaufquerschnitt mit rechtwinkligen Eckbereichen hat. In das am Wasserauslauf der vorbekannten Auslaufarmatur vorgesehene abströmseitige Auslaufende ist ein Strahlregler einsetzbar, dessen Strahlreglergehäuse einen an den Querschnitt des Armaturenauslaufs formangepassten Gehäusequerschnitt aufweist. Auch das Strahlreglergehäuse des vorbekannten Strahlreglers weist daher ein im Querschnitt rechteckiges Strahlreglergehäuse auf. An das Strahlreglergehäuse ist wasseraustrittsseitig ein Dicht- und Klemmbereich umlaufend angeformt, an dessen Außenumfang zwei umlaufende Dicht- und Klemmrippen vorgesehen sind. Diese Dicht- und Klemmrippen, die auch bei größeren Wasserdrücken zuverlässig die Befestigung des Strahlreglers im Auslauf der wasserführenden Armatur gewährleisten sollen, sind an den rechtwinkligen Querschnitt der Strahlreglergehäuseform angepasst, derart, dass auch der Dicht- und Klemmbereich unter anderem an seinen Dicht- und Klemmrippen rechteckige Eckbereiche aufweist.

Aus der WO 2008/037341 A1 (=DE-A-102006046245) ist bereits ein Strahlregler der eingangserwähnten Art bekannt, der mit seinem Strahlreglergehäuse in den Wasserauslauf einer vorzugsweise im Gussverfahren und über Fräsbearbeitung hergestellten sanitären Auslaufarmatur einsetzbar ist. Da die Auslaufarmatur im Bereich ihres rohrförmigen Wasserauslaufs einen rechteckigen Querschnitt hat, ist auch das in den Wasserauslauf einsetzbare Strahlreglergehäuse im Querschnitt rechteckig ausgestaltet. Um Kriechströme zu vermeiden, die das Strahlbild des austretenden Wasserstrahles beeinträchtigen und in dem Zwischenraum zwischen dem Innenumfang des Wasserauslaufs und dem Gehäuseaußenumfang des Strahlreglergehäuses passieren könnten, ist am Gehäuseumfang des Strahlreglergehäuses ein Dichtring vorgesehen.

Da der Wasserauslauf in den Eckbereichen seines lichten Innenumfangs gerundet ist, weist auch das Strahlreglergehäuse des vorbekannten Strahlreglers formangepasst gerundete Eckbereiche auf. Bei der Herstellung sanitärer Auslaufrohre lässt sich jedoch eine gewisse Materialersparnis erzielen, wenn das auch den Wasserauslauf umgrenzende Auslaufrohr der Auslaufarmatur in den Eckbereichen des lichten Innenumfangs möglichst scharfkantig ausgebildet ist. Es hat sich gezeigt, dass bei der Herstellung von rechteckigen Auslaufrohren, die beispielsweise aus ästhetischen Gründen scharfe Außenkanten aufweisen, auch relativ scharfe Innenkanten bevorzugt werden, weil nämlich die Herstellung von außen scharfkantigen Rohren, die innen große Eckradien aufweisen, fertigungstechnisch aufwendiger ist und einen höheren Materialaufwand in den Eckbereichen erfordert.

Zwar lässt sich ein Strahlregler der eingangs erwähnten Art, der in den Eckbereichen seines Strahlreglergehäuses gerundet ist, meist auch in einen innenumfangsseitig scharfkantig ausgebildeten Wasserauslauf einsetzen. Da jedoch der in den Eckbereichen der Gehäuseform des Strahlreglergehäuses folgende Dichtring die scharfkantigen Eckbereiche des Wasserauslaufs nicht vollständig ausfüllen kann, können beim Einsetzen eines in den Eckbereichen gerundeten Strahlreglergehäuses in einen innenumfangseitig scharfkantig ausgebildeten Wasserauslauf die an sich unerwünschten Kriechströme entstehen. Für solche Auslaufarmaturen, die einen innenumfangsseitig scharfkantigen Wasserauslauf haben, sind daher andere Strahlreglergehäuse erforderlich, die an den lichten Innenumfang des Wasserauslaufs formangepasst sind. Die Herstellung und Bevorratung von Strahlreglern mit nur in Details unterschiedlichen Strahlreglergehäusen ist jedoch mit einem erheblichen Aufwand verbunden.

Es besteht daher insbesondere die Aufgabe, einen Strahlregler der eingangs erwähnten Art zu schaffen, der auch bei verschiedenen Auslaufarmaturen mit im Querschnitt unterschiedlich ausgestalteten Wasserausläufen vorteilhaft eingesetzt werden kann.

Die erfindungsgemäße Lösung dieser Aufgabe besteht bei dem Strahlregler der eingangs erwähnten Art insbesondere darin, dass die zumindest eine Dichtung mit wenigstens einem ihrer Eckbereiche rechteckförmig und ohne Abrundung über den zugeordneten gerundeten Eckbereich des Strahlreglergehäuses vorsteht, derart, dass die Innen- und Außenkonturen der Dichtung nicht parallel verlaufen und die diese Rechteckform bildende Außenkontur der Dichtung den gedachten Verlängerungen der im Eckbereich einander angrenzenden Längs- und Querseiten des rechteckigen Strahlreglergehäuses folgt.

Der erfindungsgemäße Strahlregler weist zumindest eine Dichtung auf, die zumindest in einem der gerundeten Eckbereiche des Strahlreglergehäuses im Querschnitt eine über den Eckbereich vorstehende Rechteckform bildet, die den gedachten Verlängerungen der im Eckbereich aneinander angrenzenden Längs- und Querseiten des rechteckigen Strahlreglergehäuses folgt. Da der erfindungsgemäße Strahlregler ein in seinen Eckbereichen gerundetes Strahlreglergehäuse hat, kann der erfindungsgemäße Strahlregler zum einen in komplementär gerundete Wasserausläufe und zum anderen auch in solchen Wasserausläufen vorteilhaft eingesetzt werden, die einen in den Eckbereichen scharfkantigen lichten Innenumfang haben. Da der am Strahlreglergehäuse gehaltene Dichtring in den Eckbereichen der Gehäuseform des Strahlreglergehäuses nicht folgt, sondern dort vielmehr eine Rechteckform bildet, welche in Verlängerung der im Eckbereich einander angrenzenden Längs- und Querseiten des rechteckigen Strahlreglergehäuses über den Eckbereich des Strahlreglergehäuses vorsteht, werden auch in diesen Anwendungsfällen unerwünschte Kriechströme mit Sicherheit vermieden. Auf Grund der Eigenelastizität der Dichtung lässt sich die Dichtung aber auch im Bereich ihrer Rechteckform derart komprimieren, dass der erfindungsgemäße Strahlregler auch in solche Auslaufarmaturen eingesetzt werden kann, die einen im lichten Querschnitt an das gerundete Strahlreglergehäuse formangepasst gerundeten Wasserauslauf haben.

Um Kriechströme nicht nur in Teilbereichen des Gehäuseumfangs zu vermeiden, ist es zweckmäßig, wenn in jedem der durch die Rechteckform des Strahlreglergehäuses umgrenzten Eckbereiche zumindest eine im Querschnitt als Rechteckform ausgebildete Dichtung vorgesehen ist.

Der erfindungsgemäße Strahlregler kann in den Eckbereichen des Strahlreglergehäuses angeformte Dichtungen haben. Diese Dichtungen können beispielsweise auch an einem, im Mehrkomponenten-Spritzgussverfahren hergestellten Strahlreglergehäuse vorgesehen sein. Um jedoch den mit der Herstellung des erfindungsgemäßen Strahlreglers verbundenen Aufwand möglichst gering zu halten, ist es vorteilhaft, wenn die Dichtung als ein vom Strahlreglergehäuse separierbarer Dichtring ausgebildet ist.

Dabei wird eine als Dichtring ausgebildete Dichtung sicher und fest am Strahlreglergehäuse gehalten, wenn der Dichtring in einer, am Außenumfang des Strahlreglergehäuses umlaufenden Aufnahmenut gehalten ist.

Da der Dichtring beim Einsetzen des Strahlreglers in die unterschiedlich ausgestalteten Wasserausläufe mehr oder weniger stark komprimiert werden muss, besteht die Gefahr, dass sich die am Wasserauslauf innenumfangsseitig anliegende Dichtung während der Einsetzbewegung des Strahlreglers aufrollen und aus ihrer funktionsgerechten Form gebracht werden kann. Eine bevorzugte Weiterbildung gemäß der Erfindung sieht daher vor, dass an den Dichtring in seinen über die gerundeten Eckbereiche des Strahlreglergehäuses rechteckförmig vorstehenden Dichtring-Teilbereichen Halte- oder Stabilisierungsleisten angeformt sind, die in Längsrichtung der Gehäuse-Eckbereiche orientiert sind.

Die Halte- oder Stabilisierungsleisten können ihre Funktion besonders gut erfüllen, wenn sie in Längsrichtung der Eckbereiche der Strahlreglergehäuses orientiert sind und wenn die an den Dichtring angeformten Halte- oder Stabilisierungsleisten ein Kantenprofil haben.

Eine bevorzugte Ausführungsform gemäß der Erfindung, bei der auch die Halte- oder Stabilisierungsleisten eine zusätzliche Dichtfunktion haben können, sieht vor, dass das Kantenprofil der Halte- oder Stabilisierungsleisten eine Rechteckform hat, die in ihrer Ausrichtung der Rechteckform des Dichtrings folgt.

Damit ein Aufrollen des Dichtrings sowohl beim Einsetzen des Strahlreglers in den Wasserauslauf als auch beim Herausziehen des Strahlreglers aus dem Wasserauslauf vermieden wird, ist es zweckmäßig, wenn die Halte- oder Stabilisierungsleisten beidseits über den Dichtring vorstehen.

Die Halte- oder Stabilisierungsleisten erleichtern das Komprimieren der Dichtung während der Einsetzbewegung des Strahlreglers in den Wasserauslauf, ohne dass sich die Dichtung dabei aufrollen kann oder beschädigt wird, wenn die Halte- oder Stabilisierungsleisten sich in Richtung zu ihren freien Leistenendbereichen verjüngen.

Eine besonders vorteilhafte und mit geringem Aufwand herstellbare Ausführungsform gemäß der Erfindung sieht vor, dass der Dichtring außerhalb seiner rechteckförmigen Eckbereiche einen runden Ringquerschnitt hat.

Weitere Ausführungsformen gemäß der Erfindung ergeben sich aus den Ansprüchen sowie der Zeichnung. Nachstehend wird die Erfindung an Hand eines bevorzugten Ausführungsbeispieles noch näher beschrieben.

Es zeigt:
- Fig. 1:: einen Strahlregler in einer perspektivischen Darstellung, der ein im Querschnitt rechteckiges Strahlreglergehäuse aufweist, das in den Wasserauslauf einer sanitären Auslaufarmatur einsetzbar ist, wobei am Strahlreglergehäuse außenumfangsseitig eine als Dichtring ausgebildete Dichtung zum Abdichten zwischen dem Innenumfang des Wasserauslaufs und dem Außenumfang des Strahlreglergehäuses vorgesehen ist,
- Fig. 2:: die als Dichtring ausgebildete Dichtung des in Figur 1 dargestellten Strahlreglers in einer perspektivischen Darstellung,
- Fig. 3:: die Dichtung aus Figur 2 in einer Draufsicht,
- Fig. 4:: einen Längsschnitt durch die Dichtung aus Figur 3 in Schnittebene IV-IV aus Figur 3, und
- Fig. 5:: einen Längsschnitt durch die Dichtung aus Figur 2 bis 4 in Schnittebene V-V aus Figur 3.

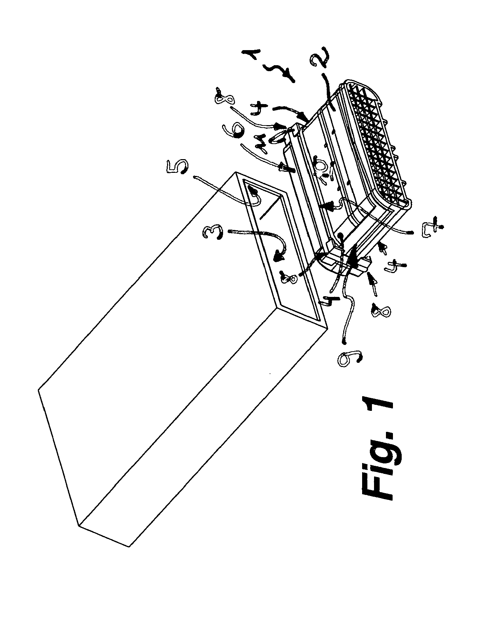

In Figur 1 ist ein Stahlregler 1 dargestellt, der ein im Querschnitt rechteckiges Strahlreglergehäuse 2 aufweist. Der Strahlregler 1 ist mit seinem Strahlreglergehäuse 2 in den Wasserauslauf 3 einer hier nicht weiter dargestellten sanitären Auslaufarmatur einsetzbar. Dabei hat der Strahlregler 1 die Aufgabe, das aus der Auslaufarmatur ausströmende Wasser zu einem homogenen, nicht-spritzenden und gegebenenfalls auch perlend-weichen, d.h. belüfteten Wasserstrahl zu formen.

Während das Strahlreglergehäuse 2 in den Eckbereichen 4 seiner Rechteckform gerundet ist, weist der im lichten Querschnitt ebenfalls rechteckige Wasserauslauf 3 demgegenüber scharfkantige Eckbereiche 5 auf. Um unerwünschte Kriechströme zu vermeiden und um zwischen dem Innenumfang des Wasserauslaufs 3 und dem Außenumfang des Strahlreglergehäuses 2 abdichten zu können, ist am Gehäuseaußenumfang des Strahlreglergehäuses 2 eine Dichtung vorgesehen.

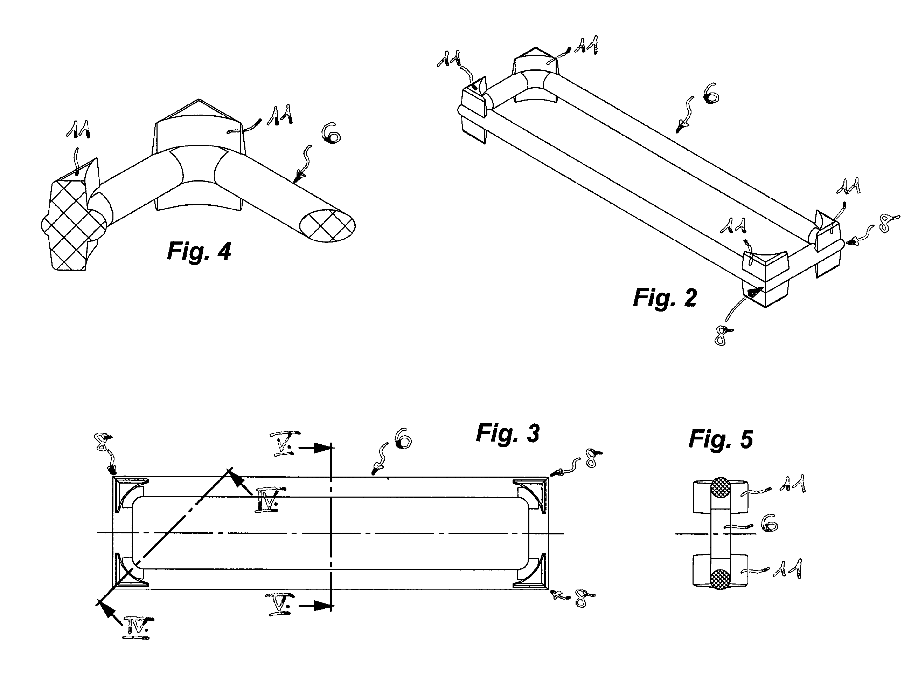

Aus den Detaildarstellungen in den Figuren 2 bis 5 wird deutlich, dass die Dichtung hier als ein vom Strahlreglergehäuse 2 separierbarer Dichtring 6 ausgebildet ist, der in einer am Außenumfang des Strahlreglergehäuses 2 umlaufenden Aufnahmenut 7 gehalten ist. Der Dichtring 6 bildet in den gerundeten Eckbereichen 4 des Strahlreglergehäuses 2 eine über die Eckbereiche 4 des Strahlreglergehäuses 2 vorstehende Rechteckform 8, welche den gedachten Verlängerungen der im Eckbereich 4 aneinander angrenzenden Längs- und Querseiten 9, 10 des rechteckigen Strahlreglergehäuses 2 folgt. Während der Dichtring 6 in den gerundeten Eckbereichen 4 des Strahlreglergehäuses 2 eine vorstehende Rechteckform 8 aufweist, weist der Dichtring 6 außerhalb seiner rechteckförmigen Eckbereiche 8 einen runden Ringquerschnitt auf.

Da der Strahlregler 1 ein in seinen Eckbereichen 4 gerundetes Strahlreglergehäuse 2 hat, kann der Strahlregler 1 zum einen in komplementär gerundete Wasserausläufe und zum anderen aber auch - wie hier - in solche Wasserausläufe 3 vorteilhaft eingesetzt werden, die einen in den Eckbereichen scharfkantigen lichten Innenumfang haben. Da der am Strahlreglergehäuse 2 gehaltene Dichtring 6 in den Eckbereichen 4 der Gehäuseform des Strahlreglergehäuses 2 nicht folgt, sondern dort vielmehr eine Rechteckform bildet, welche in Verlängerung der in den Eckbereichen 4 einander angrenzenden Längs- und Querseiten des rechteckigen Strahlreglergehäuses 2 über die Eckbereiche 4 des Strahlreglergehäuses 2 vorsteht, werden auch in diesen Anwendungsfällen unerwünschte Kriechströme mit Sicherheit vermieden. Aufgrund der Eigenelastizität des Dichtrings 6 lässt sich die Dichtung aber auch im Bereich ihrer Rechteckformen 8 derart komprimieren, dass der Strahlregler 1 auch in solchen Auslaufarmaturen einsetzbar ist, die einen im lichten Querschnitt an das gerundete Strahlreglergehäuse 2 formangepasst gerundeten Wasserauslauf 3 haben.

Um bei der Montage und Demontage des Strahlreglers 1 im Wasserauslauf 3 ein Aufrollen des Dichtrings 6 zu verhindern, sind an den Dichtring in seinen über die gerundeten Eckbereiche 4 der Strahlreglergehäuses 2 rechteckförmig vorstehenden Dichtring-Teilbereichen 8 Halte- oder Stabilisierungsleisten 11 angeformt, die in Längsrichtung der Gehäuse-Eckbereiche 4 orientiert sind. Diese, an den Dichtring 6 angeformten Halte- oder Stabilisierungsleisten 11 weisen ein Kantenprofil auf, das eine im Querschnitt rechtwinklige Außenkontur hat, die in ihrer Ausrichtung der Rechteckform des Dichtrings 6 folgt. Dabei stehen die Halte- oder Stabilisierungsleisten 11 beidseits über den Dichtring 6 vor und verjüngen sich in Richtung zu ihren freien Leistenendbereichen derart, dass die Montage und Demontage des Strahlreglers 1 mit seinem am Gehäuseaußenumfang vorgesehenen Dichtring 6 noch zusätzlich erleichtert ist.

Der hier dargestellte Strahlregler 1 zeichnet sich dadurch aus, dass er auch bei verschiedenen sanitären Auslaufarmaturen mit im Querschnitt unterschiedlich ausgestalteten Wasserausläufen vorteilhaft eingesetzt werden kann.

## Patentansprüche

1. Strahlregler (1) der ein im Querschnitt rechteckiges Strahlreglergehäuse (2) aufweist, das in den Wasserauslauf (3) einer sanitären Auslaufarmatur einsetzbar ist, wobei das Strahlreglergehäuse (2) in den Eckbereichen (4) seiner Rechteckform gerundet ist und wobei das Strahlreglergehäuse (2) an seinem Gehäuseaußenumfang zumindest eine Dichtung trägt zum Abdichten zwischen dem Innenumfang des Wasserauslaufs (3) und dem Außenumfang des Strahlreglergehäuses (2), **dadurch gekennzeichnet, dass** die zumindest eine Dichtung mit wenigstens einem ihrer Eckbereiche rechteckförmig über den zugeordneten gerundeten Eckbereich (4) des Strahlreglergehäuses (2) vorsteht, so dass die diese Rechteckform bildende Außenkontur der Dichtung den gedachten Verlängerungen der im Eckbereich (4) einander angrenzenden Längs- und Querseiten (9, 10) des rechteckigen Strahlreglergehäuses (2) folgt.

2. Strahlregler nach Anspruch 1, **dadurch gekennzeichnet, dass** in jedem der durch die Rechteckform des Strahlreglergehäuses (2) umgrenzten Eckbereiche (4) zumindest eine im Querschnitt als Recheckform (8) ausgebildete Dichtung vorgesehen ist.

3. Strahlregler nach Anspruch 1 oder 2, **dadurch gekennzeichnet, dass** die Dichtung als ein vom Strahlreglergehäuse (2) separierbarer Dichtring (6) ausgebildet ist.

4. Strahlregler nach Anspruch 3, **dadurch gekennzeichnet, dass** der Dichtring (6) in einer am Außenumfang des Strahlreglergehäuses (2) umlaufenden Aufnahmenut (7) gehalten ist.

5. Strahlregler nach einem der Ansprüche 1 bis 4, **dadurch gekennzeichnet, dass** an den Dichtring (6) in seinen über die gerundeten Eckbereiche (4) des Strahlreglergehäuses (2) rechteckförmig vorstehenden Dichtring-Teilbereichen (8) Halte- oder Stabilisierungsleisten (11) angeformt sind, die in Längsrichtung der Gehäuse-Eckbereiche (4) orientiert sind.

6. Strahlregler nach Anspruch 5, **dadurch gekennzeichnet, dass** die an den Dichtring (6) angeformten Halte- oder Stabilisierungsleisten (11) ein Kantenprofil haben.

7. Strahlregler nach Anspruch 6, **dadurch gekennzeichnet, dass** das Kantenprofil der Halte- oder Stabilisierungsleisten (11) eine Rechteckform hat, die in ihrer Ausrichtung der Rechteckform (8) des Dichtrings (6) folgt.

8. Strahlregler nach einem der Ansprüche 5 bis 7, **dadurch gekennzeichnet, dass** die Halte- oder Stabilisierungsleisten (11) beidseits über den Dichtring (6) vorstehen.

9. Strahlregler nach einem der Ansprüche 5 bis 8, **dadurch gekennzeichnet, dass** die Halte- oder Stabilisierungsleisten (11) sich in Richtung zu ihren freien Leistenendbereichen verjüngen.

10. Strahlregler nach einem der Ansprüche 3 bis 9, **dadurch gekennzeichnet, dass** der Dichtring (6) außerhalb seiner rechteckförmigen Eckbereiche (8) einen runden Ringquerschnitt hat.

## Claims

1. Jet regulator (1) comprising a jet regulator housing (2) which has a rectangular cross-section and can be inserted into the water outflow (3) of a sanitary outflow fitting, wherein the jet regulator housing (2) is rounded in the corner regions (4) of its rectangular shape, and wherein the jet regulator housing (2) bears at least one seal at its housing outer periphery in order to provide a seal between the inner periphery of the water outflow (3) and the outer periphery of the jet regulator housing (2), **characterised in that** the at least one seal protrudes with at least one of its corner regions in a rectangular shape beyond the associated rounded corner region (4) of the jet regulator housing (2), so that the outer contour of the seal forming this rectangular shape follows the imaginary extensions of the longitudinal and transverse sides (9, 10) of the rectangular jet regulator housing (2), which sides adjoin one another in the corner region (4).

2. Jet regulator as claimed in claim 1, **characterised in that** at least one seal formed in cross-section as a rectangular shape (8) is provided in each of the corner regions (4) defined by the rectangular shape of the jet regulator housing (2).

3. Jet regulator as claimed in claim 1 or 2, **characterised in that** the seal is formed as a sealing ring (6) which can be separated from the jet regulator housing (2).

4. Jet regulator as claimed in claim 3, **characterised in that** the sealing ring (6) is held in a circumferential receiving groove (7) on the outer periphery of the jet regulator housing (2).

5. Jet regulator as claimed in any one of claims 1 to 4, **characterised in that** holding or stabilising strips (11) are integrally formed on the sealing ring (6) in its sealing ring partial regions (8) which protrude in a rectangular shape beyond the rounded corner regions (4) of the jet regulator housing (2), which strips are oriented in the longitudinal direction of the housing corner regions (4).

6. Jet regulator as claimed in claim 5, **characterised in that** the holding or stabilising strips (11) integrally formed on the sealing ring (6) have an edge profile.

7. Jet regulator as claimed in claim 6, **characterised in that** the edge profile of the holding or stabilising strips (11) has a rectangular shape, the orientation of which follows the rectangular shape (8) of the sealing ring (6).

8. Jet regulator as claimed in any one of claims 5 to 7, **characterised in that** the holding or stabilising strips (11) protrude beyond the sealing ring (6) on both sides.

9. Jet regulator as claimed in any one of claims 5 to 8, **characterised in that** the holding or stabilising strips (11) taper towards their free strip end regions.

10. Jet regulator as claimed in any one of claims 3 to 9, **characterised in that** the sealing ring (6) has a round annular cross-section outside its rectangular corner regions (8).

## Revendications

1. Brise-jet (1) qui présente un corps de brise-jet (2) de section transversale rectangulaire, qui peut être inséré dans le bec (3) d'une armature sanitaire, dans lequel le corps de brise-jet (2) est arrondi dans la région des angles (4) de sa forme rectangulaire et dans lequel le corps de brise-jet (2) porte à la périphérie extérieure du corps au moins un joint destiné à assurer l'étanchéité entre la périphérie intérieure du bec (3) et la périphérie extérieure du corps de brise-jet (2), **caractérisé en ce que** ledit au moins un joint dépasse par au moins l'une de ses régions d'angle sous forme de rectangle au-delà de la région d'angle arrondie associée (4) du corps de brise-jet (2), de telle manière que le contour extérieur du joint formant cette forme rectangulaire suive les prolongements imaginaires des côtés longitudinaux et transversaux (9, 10) du corps de brise-jet rectangulaire (2) qui se rejoignent dans la région d'angle (4).

2. Brise-jet selon la revendication 1, **caractérisé en ce qu'**il est prévu dans chacune des régions d'angle (4) entourées par la forme rectangulaire du corps de brise-jet (2) au moins un joint configuré en forme de rectangle (8) en section transversale.

3. Brise-jet selon la revendication 1 ou 2, **caractérisé en ce que** le joint est configuré en forme d'anneau d'étanchéité (6) séparable du corps de brise-jet (2).

4. Brise-jet selon la revendication 3, **caractérisé en ce que** l'anneau d'étanchéité (6) est maintenu dans une rainure de réception périphérique (7) sur la périphérie extérieure du corps de brise-jet (2).

5. Brise-jet selon l'une quelconque des revendications 1 à 4, **caractérisé en ce que** des blochets de maintien ou de stabilisation (11), qui sont orientés dans la direction longitudinale des régions d'angle (4) du corps, sont formés sur l'anneau d'étanchéité (6) dans ses régions partielles d'anneau d'étanchéité (8) saillantes en forme de rectangle au-delà des régions d'angle arrondies (4) du corps de brise-jet (2).

6. Brise-jet selon la revendication 5, **caractérisé en ce que** les blochets de maintien ou de stabilisation (11) formés sur l'anneau d'étanchéité (6) ont un profil polygonal.

7. Brise-jet selon la revendication 6, **caractérisé en ce que** le profil polygonal des blochets de maintien ou de stabilisation (11) a une forme rectangulaire, qui suit dans son orientation la forme rectangulaire (8) de l'anneau d'étanchéité (6).

8. Brise-jet selon l'une des revendications 5 à 7, **caractérisé en ce que** les blochets de maintien ou de stabilisation (11) sont saillants de part et d'autre au-delà de l'anneau d'étanchéité (6).

9. Brise-jet selon l'une des revendications 5 à 8, **caractérisé en ce que** les blochets de maintien ou de stabilisation (11) se rétrécissent en direction de leurs régions d'extrémité de blochet libres.

10. Brise-jet selon l'une des revendications 3 à 9, **caractérisé en ce que** l'anneau d'étanchéité (6) présente une section transversale d'anneau ronde en dehors des régions d'extrémité de forme rectangulaire (8).
